# FASCICULE DE BREVET EUROPEEN

(11) **EP 3 377 786 B1**
(45) Date de publication et mention de la délivrance du brevet: **19.07.2023**
(21) Numéro de dépôt: 16809495.1
(22) Date de dépôt: 15.11.2016
(51) Int. Cl.: F16G 13/20

(54) **MAILLON DE CHAÎNE RIGIDE ET CHAÎNE RIGIDE ÉQUIPÉE D'UN TEL MAILLON**
GLIED FÜR STARRE KETTE UND MIT SOLCH EINEM GLIED VERSEHENE STARRE KETTE
RIGID CHAIN LINK AND RIGID CHAIN EQUIPPED WITH SUCH A LINK

(30) Priorité: 16.11.2015 FR 1560948
(43) Date de publication de la demande: 26.09.2018
(73) Titulaire: Serapid France, 76660 Londinieres (FR)
(72) Inventeur: SEIGNEUR, Ivan, 76200 Dieppe (FR); NOVICK, Philippe, 76630 Envermeu (FR)
(74) Mandataire: Cabinet Netter
(86) Numéro de dépôt international: PCT/FR2016/052953
(87) Numéro de publication internationale: WO 2017/085389

(56) Documents cités:
- AU-B2- 2010 212 303
- BE-A- 642 350
- CN-U- 204 025 533
- US-A- 2 219 125

## Description

L'invention concerne les chaînes de déplacement de charges, dites chaînes rigides, et plus particulièrement les maillons utilisés pour former de telles chaînes.

Les chaînes rigides, ou barres articulées, peuvent passer d'un état replié dans lequel elles occupent un encombrement faible à un état déployé sous la forme d'une structure rectiligne et rigide capable de tracter de fortes charges, de les supporter et de les pousser.

De telles chaînes sont formées d'une suite de maillons analogues, chaque maillon comprenant deux joues latérales, parfois appelées flancs, montées à rotation d'un maillon à l'autre par l'intermédiaire d'axes de rotation. Les maillons sont agencés de sorte que la chaîne peut passer d'un état rectiligne à un état courbé ou enroulé sur elle-même et *vice versa.* La chaîne peut être courbée dans un unique plan et dans un unique sens. Les courbures dans d'autres directions et les torsions sont empêchées, notamment par une configuration et un ajustement adaptés des pièces composant la chaîne.

Dans FR 2 134 196, chaque joue de maillon est réalisée par assemblage de deux pièces mécaniques différentes. Une première pièce plate de forme complexe transmet des efforts de compression d'un maillon à l'autre lorsque la chaîne est rectiligne. Une seconde pièce plate de forme oblongue relie deux axes de rotation adjacents et travaille essentiellement en traction. Les deux pièces sont assemblées l'une contre l'autre par sertissage. Parfois, un défaut de fabrication, par exemple de planéité, apparaît dans une pièce. Un tel défaut peut être tolérable à l'échelle du maillon. Autrement dit, le fonctionnement de la chaîne n'est pas remis en cause lorsqu'un maillon de la chaîne présente un défaut minime. Or ces pièces sont généralement fabriquées en série, par lot. Lorsqu'un défaut, même minime, est reproduit sur chacune des pièces d'un lot utilisées pour former une chaîne, ces défauts se cumulent sur la longueur de la chaîne jusqu'à empêcher son bon fonctionnement, en particulier sur de grandes longueurs. En outre, en cas d'effort de flexion orienté sensiblement à la perpendiculaire des flancs, le sertissage et/ou la planéité des flancs peuvent être dégradés jusqu'au cintrage de l'un des flancs et au blocage de la chaîne.

FR 2 573 832 présente un mode de réalisation pour lequel une pièce d'un seul tenant est utilisée pour former chaque joue de la chaîne. De telles pièces sont aussi sujettes au cintrage en cas d'effort de flexion à la perpendiculaire des flancs, ce qui limite les conditions d'utilisation de la chaîne. En outre, la longueur de la chaîne reste limitée sous peine de défaillances dues à des défauts de fabrication sur un lot de pièces.

La configuration présentée dans FR 2 345 626 est simplifiée : la joue de la chaîne est constituée d'un seul type de pièce. Pour chaque joue de la chaîne, deux rangs de pièces se superposent en quinconce. La chaîne est aussi fragile en cas d'effort de flexion orienté à la perpendiculaire des flancs.

La Demanderesse a développé des chaînes rigides dont les joues sont réalisées par assemblage de pièces plates identiques les unes aux autres. Une telle configuration est présentée dans FR 2 786 476. La fabrication des pièces et leur assemblage sont facilités. Dans cette configuration, la superposition de deux pièces identiques en quinconce pour chaque joue reste nécessaire. Cette superposition est difficile à préserver dans le temps, en particulier en cas d'effort de flexion perpendiculaire au plan des flancs. Du jeu et des mouvements relatifs non souhaités apparaissent entre les pièces d'un flanc de la chaîne. De tels jeux peuvent conduire à une usure prématurée, voir un cintrage de la chaîne .

AU2010212303B divulgue une chaîne rigide selon le préambule de la revendication 1.

CN204025533U et US2219125A divulguent d'autres chaînes rigides de l'état de la technique.

L'invention vient améliorer la situation.

La Demanderesse propose une chaîne rigide selon la revendication 1 formée par l'assemblage de maillons de chaîne rigide les uns à la suite des autres les maillons comprenant au moins une joue, de forme générale rectangulaire, d'épaisseur sensiblement constante perpendiculairement à son plan principal. La joue comprend une première partie et une seconde partie. Chacune des parties comprend :
- un talon agencé de manière à venir en appui contre un talon correspondant d'une joue analogue d'un maillon adjacent de la chaîne rigide, et
- une embase agencée de manière à former palier autour d'un axe de rotation par rapport audit maillon adjacent.

Le talon et l'embase s'étendent respectivement d'un côté et de l'autre du plan principal et parallèlement audit plan principal.

Un tel maillon de chaîne rigide permet d'assurer la transmission d'efforts selon la direction principale de la chaîne tout en présentant une bonne résistance au cintrage. La forme des joues conduit à une interpénétration d'une joue à l'autre plutôt qu'une simple superposition. En s'emboîtant, les joues présentent une résistance au cintrage améliorée et une résistance au flambage de la chaîne améliorée, et ce quel que soit le sens des efforts de flexion appliqués. Des pièces de renfort supplémentaires sont superflues. La fabrication des joues est simple et peu coûteuse. Lors de l'assemblage en une chaîne rigide, il suffit de juxtaposer des joues identiques et d'orientation inversée d'un maillon sur l'autre. L'orientation de chaque joue dans l'assemblage est imposée par sa forme. Une erreur d'assemblage est impossible. La Demanderesse a également constaté qu'en inversant l'orientation de la joue de flanc une fois sur deux, chaque défaut de fabrication d'une joue, par exemple sa planéité, est rattrapée par le défaut de la joue suivante orientée en sens inverse. Autrement dit, si toutes les joues d'un lot présentent le même défaut, alors une paire de maillons dont les joues sont orientées dans des directions opposées l'une par rapport à l'autre peut alors présenter un défaut nul. Le défaut d'une joue compense le défaut de l'autre. Au lieu de s'accumuler sur la longueur de la chaîne, les effets des défauts de fabrication de chaque joue se compensent mutuellement. La longueur de la chaîne n'est plus limitée par de tels défauts de fabrication.

Le maillon de chaîne rigide peut présenter les caractéristiques optionnelles suivantes, seules ou en combinaison les unes avec les autres :
- le talon de la première partie et le talon de la seconde partie s'étendent tous deux d'un côté du plan principal tandis que l'embase de la première partie et l'embase de la seconde partie s'étendent toutes deux du côté opposé du plan principal. Cela permet de former des maillons les uns à la suite des autres en disposant les joues successivement dans un sens et dans l'autre. Les effets d'éventuels défauts de fabrication d'un lot de joues se compensent ainsi d'un maillon sur l'autre.
- l'embase de la première partie et l'embase de la seconde partie sont sensiblement le symétrique l'une de l'autre par rapport à un plan transversal perpendiculaire au plan principal. Cela facilite l'assemblage d'un maillon avec son voisin par disposition des joues successivement dans un sens et dans l'autre tout en réduisant les jeux en fonctionnement.
- le maillon porte des surfaces agencées sensiblement en correspondance de forme pour coopérer par butée avec des surfaces correspondantes de maillons analogues de la chaîne rigide. Le talon de la première partie et le talon de la seconde partie étant sensiblement le symétrique l'un de l'autre par rapport à un plan transversal perpendiculaire au plan principal, à la forme des surfaces agencées pour coopérer par butée près. Cela facilite l'assemblage d'un maillon avec son voisin par disposition des joues successivement dans un sens et dans l'autre tout en réduisant les jeux en fonctionnement. En outre, les zones d'appui en compression entre deux maillons se situent sensiblement à équidistance des axes de rotation desdits maillons, ce qui améliore la répartition des contraintes et la résistance à la flexion.
- la joue est formée d'un seul tenant. Cela permet de limiter les risques de fragilité d'une joue relatifs à une liaison telle qu'un sertissage.
- le talon et l'embase de l'une au moins de la première partie et de la seconde partie présentent chacun une face sensiblement coplanaires avec le plan principal. Cela permet de limiter le jeu et les mouvements relatifs entre les joues de deux maillons voisins.
- la joue comprend en outre un corps, le corps reliant les talons et les embases les uns aux autres. Cela permet d'améliorer la solidité d'une joue.
- la première partie et la seconde partie de la joue comprennent chacune une portion de liaison reliant le talon et l'embase l'un à l'autre, les portions de liaison étant formées par pliage. Cela facilite la fabrication des joues. La portion de liaison peut par exemple être formée simultanément à une découpe de la joue dans une ébauche de tôle.
- un trou sensiblement circulaire est ménagé dans l'embase. Un espace est ménagé entre le talon et l'embase, ledit espace étant ouvert sur une extrémité longitudinale de la pièce et s'étendant longitudinalement vers l'extrémité longitudinale opposée jusqu'au-delà du centre du trou circulaire. Un tel espace permet une interpénétration profonde d'une joue dans l'autre. Une tolérance dans la réalisation de la joue est permise sans qu'une portion déformée vienne gêner l'interpénétration.

Selon la présente invention
- chaque talon porte une surface frontale orientée de manière à venir en appui contre une surface correspondante dudit maillon adjacent. Une telle surface frontale permet d'assurer une transmission des efforts sensiblement alignée avec la direction principale de la chaîne à l'état rectiligne et limite l'apparition d'efforts de flexion de la joue.
- la joue porte des surfaces latérales orientées de manière à limiter la rotation relative du maillon et dudit maillon adjacent par butée contre des surfaces correspondantes dudit maillon adjacent. Le bon alignement des joues les unes par rapport aux autres est bien ajusté dans la portion rectiligne de la chaîne.
- la joue comprend en outre un téton du même côté du plan principal que les embases, les talons présentant l'une desdites surfaces latérales, le téton portant une autre desdites surfaces latérales, de sorte que la surface latérale du talon vienne en butée contre la surface latéral correspondante du téton dudit maillon adjacent et que la surface du téton vienne en butée contre la surface latéral correspondante du talon dudit maillon adjacent. Le bon ajustement en rotation des joues les unes par rapport aux autres est bien maîtrisé sans que l'épaisseur hors-tout des joues ne soit augmentée.

Selon l'invention, la Demanderesse propose également une chaîne rigide formée par l'assemblage de maillons tels que définis ci-avant, les uns à la suite des autres, de sorte que l'orientation de la joue d'un maillon soit inversée selon une direction d'épaisseur par rapport à celle de la joue respectivement du maillon précédent et du maillon suivant. Chaque maillon est monté à rotation respectivement avec le maillon précédent et avec le maillon suivant par l'intermédiaire de barres enfilées dans les embases.

La Demanderesse propose aussi un procédé de fabrication d'un maillon tel que défini ci-avant comprenant les étapes suivantes :
a) détourer une ébauche de joue dans un flan de tôle, et
b) décaler les embases par rapport aux talons selon la direction de l'épaisseur et former des portions de liaison par pliage.

D'autres caractéristiques, détails et avantages de l'invention apparaîtront à la lecture de la description détaillée ci-après, et des dessins annexés, sur lesquels :
- la figure 1 est une vue d'une portion de chaîne selon l'invention ;
- la figure 2 est une vue de la portion de la figure 1 depuis un point de vue opposé ;
- la figure 3 montre une vue en perspective d'une joue de la chaîne de la figure 1 ;
- la figure 4 montre une vue en perspective de deux joues identiques avant assemblage en une chaîne rigide selon l'invention ;
- la figure 5 montre l'assemblage partiel des deux joues de la figure 4 ;
- la figure 6 montre une vue de dessus de l'assemblage de la figure 5 ;
- la figure 7 montre une vue de face de l'assemblage de la figure 5 ;
- les figures 8 et 9 montrent des vues similaires à celle de la figure 7 de deux autres modes de réalisation de joues selon l'invention ;
- la figure 10 montre une vue de face de l'assemblage de trois joues identiques selon l'invention ;
- la figure 11 montre une vue en perspective d'un assemblage de trois joues identiques selon l'invention dans un état courbé de la chaîne ; et
- la figure 12 montre une vue de face de l'assemblage de la figure 11.

Les dessins et la description ci-après contiennent pour l'essentiel des éléments de caractère certain. Ils pourront donc non seulement servir à mieux faire comprendre la présente invention mais aussi contribuer à sa définition le cas échéant. Il est relevé que des éléments comme la géométrie de joues complexes sont difficiles à définir complètement, autrement que par le dessin.

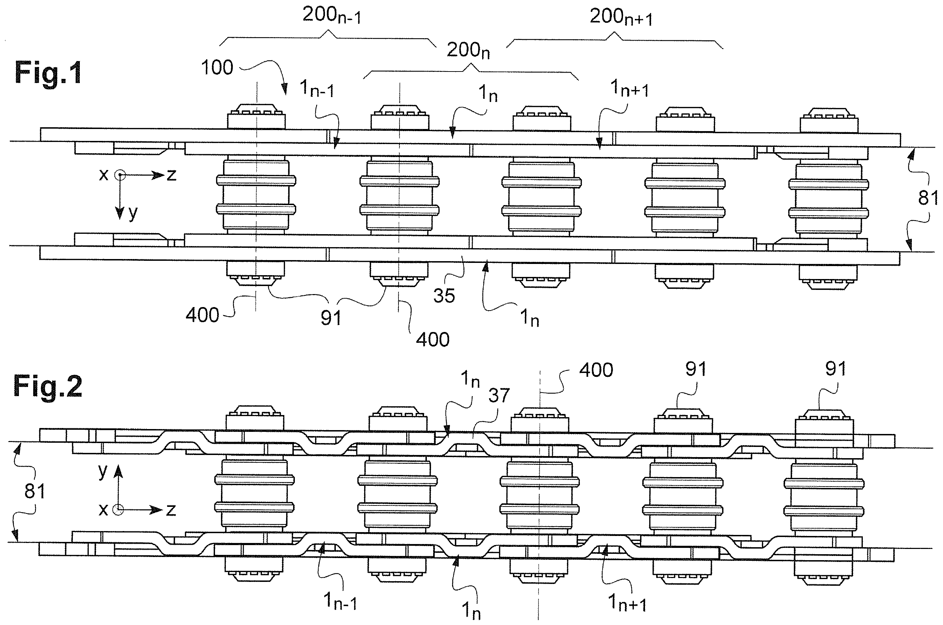

En figures 1 et 2 une chaîne est référencée 100. Des maillons 200 de la chaîne 100 sont distingués les uns des autres par un indice 1 à N depuis un maillon de queue jusqu'à un maillon de tête. Ainsi, l'indice n vise un maillon 200ₙ tandis que l'indice n+1 vise le maillon suivant 200ₙ₊₁ du côté tête de la chaîne 100. Chaque joue, ou flanc, pour un maillon 200 de la chaîne 100 est référencée 1.

Trois directions, perpendiculaires entre elles, sont symbolisées par un repère tridimensionnel :
- la direction x correspond à la direction transversale, perpendiculaire au plan des figures 1 et 2 ;
- la direction y correspond à la direction d'épaisseur des joues 1 de la chaîne 100, à la direction des axes de rotation 400 des maillons 200 et à la direction haut-bas de la figure 1;
- la direction z correspond à la direction longitudinale, à la direction principale de la chaîne 100 dans sa configuration rectiligne et à la direction gauche-droite de la figure 1.

Chaque maillon 200ₙ comprend une ou plusieurs joues 1ₙ. Dans l'exemple des figures 1 et 2, chaque maillon 200ₙ comprend une paire de joues 1ₙ, chacune des joues 1ₙ appartenant à une rangée formant l'un des deux flancs de la chaîne 100. Les deux joues 1ₙ d'un maillon 200ₙ sont montées libres en rotation autour de deux barres 91 communes s'étendant selon les axes de rotation 400. Les joues 1ₙ sont fixées en translation autour des barres 91, par exemple ici au moyen de circlips. La chaîne 100 présente une section, perpendiculaire à sa direction longitudinale z, de forme généralement carrée. En variante, la chaîne 100 comprend une seule rangée ou plus de deux rangées de joues. Dans ces cas, chaque maillon 200ₙ comprend respectivement une ou plus de deux joues 1ₙ.

Chaque rangée de la chaîne 100 comprend une succession en quinconce de joues 1. Une joue 1ₙ d'un maillon 200ₙ est à la fois :
- montée à rotation autour d'une première barre 91 commune avec la pièce 1ₙ₋₁ du maillon 200ₙ₋₁ de queue immédiatement précédent ;
- alignée longitudinalement avec la pièce 1ₙ₋₂ du maillon 200ₙ₋₂ de queue précédent ;
- montée à rotation autour d'une seconde barre 91 commune avec la pièce 1ₙ₊₁ du maillon 200ₙ₊₁ de tête immédiatement suivant ;
- alignée longitudinalement avec la pièce 1ₙ₊₂ du maillon 200ₙ₊₂ de tête suivant.

Les pièces 1 de la chaîne 100 sont, ici, identiques. Chaque pièce 1 est de forme générale rectangulaire et présente une longueur, une largeur et une épaisseur. L'orientation de chaque pièce 1 dans la chaîne 100 est telle que :
- la largeur de la pièce 1 est orientée selon la direction transversale x de la chaîne 100,
- l'épaisseur de chaque pièce 1 est orientée selon la direction d'épaisseur y, et
- la longueur est orientée selon la direction longitudinale z de la chaîne 100.

Dans les figures suivantes, le repère tridimensionnel représente l'orientation de la pièce 1 par rapport à la chaîne 100, ou de la pièce 1ₙ lorsque plusieurs pièces 1 sont représentées.

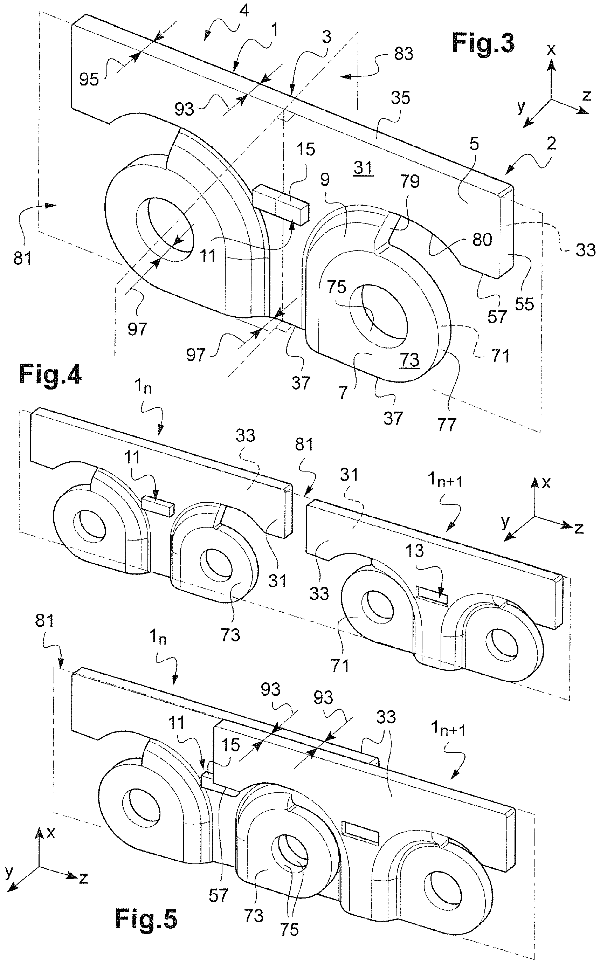

Il est maintenant fait référence à la figure 3 qui représente une joue 1 isolée du maillon 200.

La joue 1 présente un plan principal 81 perpendiculaire à la direction y de l'épaisseur. La joue 1 présente deux parties longitudinalement opposées : une première partie 2 et une seconde partie 4. La première partie 2 et la seconde partie 4 sont mutuellement délimitées par un plan transversal 83 perpendiculaire à la direction longitudinale z et au plan principal 81. À l'état assemblé en une chaîne 100, la partie longitudinalement du côté de la tête de la chaîne 100 est appelée partie de tête tandis que l'autre partie est appelée partie de queue. En fonction du sens dans lequel est montée la joue 1 dans la chaîne 100, la première partie 2, à droite sur la figure 1, forme la partie de tête tandis que la seconde partie 4, à gauche sur la figure 1, forme la partie de queue, ou *vice versa.*

Dans l'exemple décrit ici, la première partie 2 et la seconde partie 4 de la joue 1 sont le symétrique l'une de l'autre par rapport au plan transversal 83. Le plan transversal 83 constitue un plan de symétrie de la joue 1. En variante, la joue 1 présente des exceptions à la symétrie par rapport au plan transversal 83.

La joue 1 comprend un corps 3 en forme de plaque ou platine. Le corps 3 présente une première face 31 et une seconde face 33 opposée. La première face 31 et la seconde face 33 sont sensiblement planes et perpendiculaires à la direction y d'épaisseur. La première face 31 est sensiblement confondue avec le plan principal 81. La distance entre la première face 31 et la seconde face 33 définit l'épaisseur 93 du corps 3. L'épaisseur 93 est sensiblement homogène dans le corps 3.

Il est maintenant décrit une moitié longitudinale de la joue 1 correspondant à la première partie 2, à droite du plan transversal 83 sur la figure 1. L'autre moitié correspondant à la seconde partie 4 se déduit par symétrie par rapport au plan transversal 83.

La première partie 2 de la joue 1 comprend un talon 5 et une embase 7. Le talon 5 est situé d'un côté de la joue 1 selon la direction transversale x, en haut sur la figure 1, tandis que l'embase 7 est située du côté opposé, en bas sur la figure 1.

Le talon 5 désigne ici une partie de la joue 1 configurée pour travailler en compression et en appui contre des parties correspondantes d'autres maillons. Le talon 5 est formé dans le prolongement longitudinal du corps 3, à l'extrémité longitudinale opposée au plan transversal 83, ou extrémité distale. Le corps 3 et le talon 5 sont délimités par un chant longitudinal 35 commun, en haut sur la figure 1. Ici, le chant longitudinal 35 est sensiblement continu, plan et perpendiculaire à la direction transversale x. En variante, le chant longitudinal 35 est légèrement bombé ou légèrement concave, par exemple afin de coopérer avec un organe de guidage de forme correspondante lors du mouvement de la chaîne 100. Le chant longitudinal 35 relie la première face 31 et la seconde face 33 l'une à l'autre et s'étend sur toute la longueur de la joue 1.

À l'extrémité longitudinale de la première partie 2, le talon 5 est délimité par une surface frontale 55. La surface frontale 55 relie aussi la première face 31 et la seconde face 33 l'une à l'autre. En outre, la surface frontale 55 et le chant longitudinal 35 sont sensiblement perpendiculaires et reliés l'un à l'autre par un congé de raccordement. Ici, la surface frontale 55 s'étend selon la direction transversale x sur une largeur inférieure à la moitié de la largeur hors-tout de la joue 1.

La surface frontale 55 est configurée de manière à coopérer par correspondance de forme avec une surface correspondante d'une joue analogue 1. À l'état assemblé et rectiligne de la chaîne 100, la surface frontale 55ₙ de la première partie 2ₙ de la joue 1ₙ du maillon 200ₙ coopère avec une surface frontale 55ₙ₊₂ d'une seconde partie 4 ₙ₊₂ d'une joue 1 ₙ₊₂ analogue à la joue 1ₙ. Les surfaces frontales 55 coopèrent entre elles par butée.

Ici, les surfaces frontales 55 sont sensiblement continues, planes et perpendiculaires à la direction longitudinale z. Les surfaces frontales 55 respectivement de la première partie 2 et de la seconde partie 4 de la joue 1 sont alors strictement le symétrique l'une de l'autre par rapport au plan transversal 83. En variante, les surfaces frontales 55 de la première partie 2 et de la seconde partie 4 présentent des formes différentes l'une de l'autre mais sensiblement correspondantes. Par exemple, l'une est convexe et l'autre concave. Dans ce cas, cela constitue une exception au caractère symétrique de la joue 1. La première partie 2 et la seconde partie 4 sont sensiblement le symétrique l'une de l'autre, à la forme des surfaces frontales 55 près.

Le talon 5 est délimité, selon la direction transversale x à l'opposé du chant longitudinal 35, par une surface latérale 57 et une portion de raccordement 80. La surface latérale 57 est sensiblement plane et perpendiculaire à la direction transversale x, située du côté de l'extrémité longitudinale de la première partie 2 et reliée à la surface frontale 55 par un congé de raccordement. La portion de raccordement 80 est formée dans le prolongement de la surface latérale 57 vers le plan transversal 83. La portion de raccordement 80 est sensiblement concave et arrondie. La portion de raccordement 80 s'étend en partie autour de l'embase 7 et à distance de celle-ci. La surface latérale 57 et la portion de raccordement 80 relient la première face 31 et la seconde face 33 l'une à l'autre.

L'embase 7 présente une forme de portion de plaque généralement circulaire. L'embase 7 s'étend sensiblement selon un plan parallèle au corps 3 et au talon 5. L'embase 7 présente une première face 71 et une seconde face 73 opposée. La première face 71 et la seconde face 73 sont sensiblement planes et perpendiculaires à la direction y d'épaisseur. La première face 71 est sensiblement confondue avec le plan principal 81. La distance entre la première face 71 et la seconde face 73 définit l'épaisseur 97 de l'embase 7, qui est ici sensiblement homogène et égale à l'épaisseur 93 du corps 3 et du talon 5. Le corps 3 et le talon 5 d'une part et l'embase 7 d'autre part s'étendent respectivement d'un côté et de l'autre du plan principal 81 et parallèlement au plan principal 81. L'épaisseur 93 du corps 3 et du talon 5 et l'épaisseur 97 de l'embase sont sensiblement constantes perpendiculairement au plan principal 81 et égales l'une à l'autre. La joue 1 présente une épaisseur sensiblement constante. L'épaisseur hors-tout de la joue 1 est sensiblement égale au double des épaisseurs 93 et 97, ce qui résulte du décalage de l'embase 7 par rapport au corps 3 et au talon 5 selon la direction de l'épaisseur y.

L'embase 7 est traversée selon la direction d'épaisseur y par un trou circulaire 75. L'alésage du trou 75 est sensiblement cylindrique et relie la première face 71 et la seconde face 73 l'une à l'autre. En fonctionnement, l'embase 7 forme palier pour la rotation de la joue 1 autour d'une barre 91 disposée dans le trou 75 selon un des axes de rotation 400.

L'embase 7 est reliée au corps 3 et au talon 5 par l'intermédiaire d'une portion de liaison 9. La portion de liaison 9 s'étend au travers du plan principal 81. La portion de liaison 9 présente une forme complexe, en double pli, dont chacun des plis forme sensiblement un angle droit de sens opposé l'un par rapport à l'autre, sensiblement en forme de « S ». Le double pli de la portion de liaison 9 est généralement arrondie de sorte que la première face 31 du corps 3 et du talon 5 et la seconde face 73 de l'embase 7 soient reliées l'une à l'autre de manière sensiblement continue. De même, la seconde face 33 du corps 3 et du talon 5 et la première face 71 de l'embase 7 sont reliées l'une à l'autre de manière sensiblement continue.

Le corps 3 et l'embase 7 sont délimités, selon la direction transversale x, par un chant longitudinal 37 opposé au chant longitudinal 35, en bas sur la figure 1. Ici, le chant longitudinal 37 est sensiblement plan et perpendiculaire à la direction transversale x. En variante, le chant longitudinal 37 est légèrement bombé ou légèrement concave, par exemple afin de coopérer avec un organe de guidage de forme correspondante lors du mouvement de la chaîne 100. Le chant longitudinal 37 s'étend d'une embase 7 à son symétrique en passant par une partie intermédiaire du corps 3 et des portions de liaison 9. Contrairement au chant longitudinal 35, le chant longitudinal 37 n'est pas rectiligne et présente des décalages selon la direction d'épaisseur y le long du corps 3, des portions de liaison 9 et des embases 7 comme cela est visible, par exemple, en figure 2. Le chant longitudinal 37 relie la première face 31 et la seconde face 33 du corps 3 l'une à l'autre, et la première face 71 et la seconde face 73 de l'embase 7 l'une à l'autre.

À chacune de ses extrémités longitudinales, le chant longitudinal 37 est relié de manière sensiblement continue à un chant transversal 77. Le chant transversal 77 présente une forme sensiblement cylindrique entourant partiellement l'embase 7, sur plus de 180° autour du trou 75.

La partie de l'embase 7 située du côté du plan transversal 83, ou partie proximale, est partiellement entourée de la portion de liaison 9 qui la relie au corps 3 tandis que la partie de l'embase 7 la plus éloignée du plan transversal 83, ou partie distale, est libre et délimitée par le chant transversal 77. Une surface de liaison 79 délimite l'extrémité longitudinale de la portion de liaison 9. La surface de liaison 79 s'étend sensiblement à la perpendiculaire de la direction longitudinale z. La surface de liaison 79 se relie à la portion de raccordement 80.

En résumé, le contour de la joue 1 est formé successivement par :
- le chant longitudinal 35 qui s'étend sur toute la longueur de la joue 1,
- la surface frontale 55 de la première partie 2,
- la surface latérale 57 de la première partie 2,
- la portion de raccordement 80 de la première partie 2,
- la surface de liaison 79 de la première partie 2,
- le chant transversal 77 de la première partie 2,
- le chant longitudinal 37 qui s'étend de la première partie 2 jusqu'à la seconde partie 4,
- le chant transversal 77 de la seconde partie 4,
- la surface de liaison 79 de la seconde partie 4,
- la portion de raccordement 80 de la seconde partie 4,
- la surface latérale 57 de la seconde partie 4,
- la surface frontale 55 de la seconde partie 4 reliée au chant longitudinal 35.

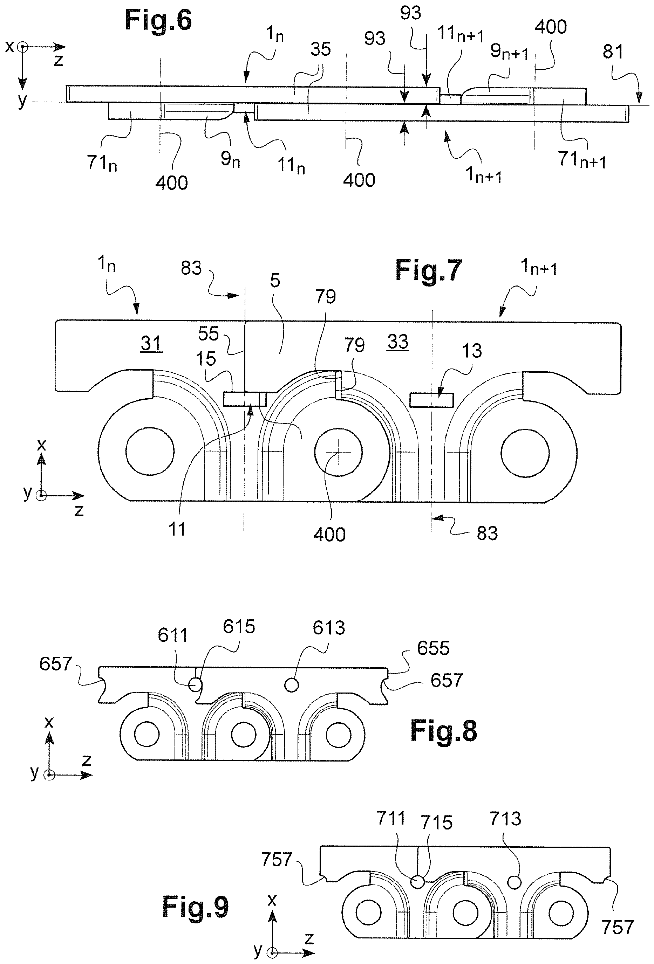

Le chant transversal 77, la surface de liaison 79 et la portion de raccordement 80 de la première partie 2, respectivement de la seconde partie 4, définissent ensembles un espace ménagé entre le talon 5 et l'embase 7. L'espace est ouvert sur une extrémité longitudinale de la joue 1 et s'étend partiellement autour de l'embase 7 vers le plan transversal 83 longitudinalement au-delà du centre du trou 75. Ici, l'espace prend la forme d'une découpe. Autrement dit, la surface de liaison 79 qui délimite la portion de liaison 9 de l'espace libre est située à une distance du plan transversal 83 strictement inférieure à la distance qui sépare l'axe de rotation 400 du plan transversal 83. Ainsi, lors de l'assemblage de deux joues 1 autour d'une barre 91 commune, les surfaces de liaison 79 de chacune des joues 1 n'entrent pas en contact et une distance entre elles est préservée, comme cela apparaît en figure 7.

Dans l'exemple décrit ici, la joue 1 comprend un téton 11. Le téton 11 fait saillie de la première face 31 du corps 3. Le téton 11 fait donc saillie du même côté du plan principal 81 que les embases 7. Le téton 11 est, ici, sensiblement centré sur la première face 31 et s'étend au travers du plan transversal 83.

Ici, le téton 11 présente une section rectangulaire. Le téton 11 présente une surface latérale 15. La surface latérale 15 est, ici, sensiblement plane, perpendiculaire à la direction transversale x et orientée vers le chant longitudinal 35, vers le haut sur la figure 1. La position du téton 11 par rapport au corps 3 est sélectionnée de sorte que la surface latérale 15 soit sensiblement coplanaire avec la surface latérale 57 du talon 5 et orientée dans le sens opposé. Ainsi, la surface latérale 15 forme un siège pour la surface latérale 57 de chacune des deux joues 1 adjacentes lorsque la chaîne 100 adopte une position rectiligne. Cette coopération en butée est représentée par exemple en figure 5.

La surface latérale 57 du talon 5 et la surface latérale 15 du téton 11 sont configurées de manière à coopérer par correspondance de forme d'une joue 1 à l'autre. À l'état assemblé et rectiligne de la chaîne 100, les surfaces latérales 57ₙ coopèrent respectivement avec les surfaces latérales 15ₙ₋₁ et 15ₙ₊₁. La surface latérale 15ₙ coopère avec l'une des surfaces latérales 57ₙ₋₁ et l'une des surfaces latérales 57ₙ₊₁. Lorsque la chaîne 100 passe d'un état courbé à un état rectiligne les surfaces précitées viennent coopérer par butée de manière à stopper la rotation relative des deux joues 1 adjacentes quand une configuration rectiligne est atteinte.

La seconde face 33 présente une empreinte 13, ou concavité, correspondant au téton 11. L'empreinte 13 est le résultat de l'opération de déformation d'une plaque métallique pour former le téton 11, ici à la presse. En variante, l'empreinte 13 est absente, par exemple lorsque le téton 11 est obtenu par ajout de matière sur la première surface 31, par exemple par soudage ou pièce rapportée par vissage ou mécano-assemblage.

La forme rectangulaire du téton 11 du mode de réalisation des figures 3 à 7, notamment l'orientation de la surface latérale 15 perpendiculaire à la direction x, permettent d'éviter la transmission d'efforts de compression orientés selon la direction z d'un maillon 200 au suivant.

En figure 8, une variante de réalisation du téton est représentée. Le téton est référencé 611. Le téton 611 présente une section circulaire et est positionné plus proche du chant longitudinal 35 que le téton 11 du mode de réalisation décrit ci-avant. L'empreinte creuse 613 dans la seconde face 33 est également de section circulaire. Le téton 611 présente une surface latérale 615 de forme sensiblement cylindrique. Dans cette variante, la surface latérale 657 présente une correspondance de forme avec la surface latérale 615, c'est-à-dire une forme concave sensiblement cylindrique, ou en demialésage. La surface latérale 657 est formée en l'extrémité du talon 5, c'est-à-dire ménagée dans la surface frontale 655. La forme de la surface latérale 657 se distingue d'une forme strictement circulaire en ce qu'elle se raccorde à la surface frontale 655 par un congé de fuite, tangent à la forme de cercle. Un tel congé de fuite facilite le placement du téton 611 contre la surface latérale 657 au cours du repliage/dépliage de la portion de chaîne 100.

En figure 9 est représentée une variante de réalisation du téton, référencé 711. Le téton 711 présente aussi une section circulaire et est positionné au même emplacement du corps 3 que le téton 11 de la figure 3. L'empreinte creuse 713 dans la seconde face 33 est également de section circulaire. Le téton 711 présente une surface latérale 715 de forme sensiblement cylindrique. Dans cette variante, la surface latérale 757 présente aussi une correspondance de forme, c'est-à-dire une forme de découpe en quart de cercle. La surface latérale 757 est formée à l'angle reliant la surface frontale 55 et le chant longitudinal correspondant à la surface latérale 57 du mode de réalisation de la figure 3.

Dans les exemples décrits ici, les surfaces latérales 15, 615, 715, 57, 657 et 757 de chacune de la première partie 2 et de la seconde partie 4 de chaque joue 1 sont symétriques deux à deux par rapport au plan transversal 83. La symétrie de la joue 1 est strictement respectée. En variante, les surfaces latérales de la première partie 2 et les surfaces latérales de la seconde partie 4 présentent des configurations asymétriques. Dans ce cas, cela constitue une exception au caractère symétrique de la joue 1. La première partie 2 et la seconde partie 4 sont sensiblement le symétrique l'une de l'autre, à la forme des surfaces latérales 15, 615, 715, 57, 657 et 757 près.

Il est maintenant fait référence aux figures 4 à 7. Sur ces figures, est représenté l'assemblage de deux joues 1ₙ et 1ₙ₊₁ appartenant respectivement à deux maillons adjacents d'une chaîne 100.

Pour l'opération d'assemblage, les joues 1ₙ et 1ₙ₊₁ sont positionnées dans des orientations similaires mais de sens opposés selon la direction y de l'épaisseur.

Autrement dit, les flancs longitudinaux 35ₙ et 35ₙ₋₁ sont alignés, les flancs longitudinaux 37ₙ et 37ₙ₊₁ sont alignés et les premières faces 31ₙ et 31ₙ₊₁ sont orientées dans des directions opposées. Les plans principaux 81ₙ et 81ₙ₊₁ sont confondus. Le corps 3ₙ et les talons 5ₙ sont alignés avec les embases 7ₙ₊₁ tandis que le corps 3ₙ₊₁ et les talons 5ₙ₊₁ sont alignés avec les embases 7ₙ. Pour réaliser l'assemblage et passer de l'état représenté en figure 4 à celui représenté en figures 5, 6 et 7, les joues 1ₙ et 1ₙ₊₁ s'interpénètrent par un mouvement de rapprochement selon la direction longitudinale commune z. En position finale, le trou 75ₙ de la seconde partie 4ₙ est aligné avec le trou 75ₙ₊₁ de la seconde partie 4ₙ₊₁ de sorte que la barre 91 puisse y être enfilée en définissant l'axe de rotation 400.

Pour chaque joue 1, l'assemblage en interpénétration, premières faces 31 et 71 contre premières faces 31 et 71, conduit à former une rangée en quinconce. En alternant le sens des joues 1 d'un maillon 200 à l'autre, les premières parties 2 sont superposées avec des premières parties 2 tandis que les secondes parties 4 sont superposées avec des secondes parties 4 selon la direction transversale y. Les surfaces latérales 15, 615, 715, 57, 657, 757 des premières parties 2 d'une part et des secondes parties 4 d'autre part peuvent donc être différentes et incompatibles. Dans ce cas, cela constitue une exception au caractère symétrique de la joue 1. La première partie 2 et la seconde partie 4 sont sensiblement le symétrique l'une de l'autre, à la forme des surfaces latérales 15, 615, 715, 57, 657 et 757 près. Les surfaces frontales 55 des premières parties 2 et les surfaces frontales 55 des secondes parties 4 viennent en appui les unes contre les autres. Elles sont compatibles les unes avec les autres.

L'épaisseur de l'assemblage des joues 1ₙ et 1ₙ₊₁ correspond alors à l'épaisseur hors tout d'une joue 1, c'est-à-dire au double de l'épaisseur 93 du corps 3.

L'assemblage de deux joues 1ₙ et 1ₙ₊₁ forme un motif élémentaire reproduit autant de fois que nécessaire pour former une chaîne 100 de la longueur désirée.

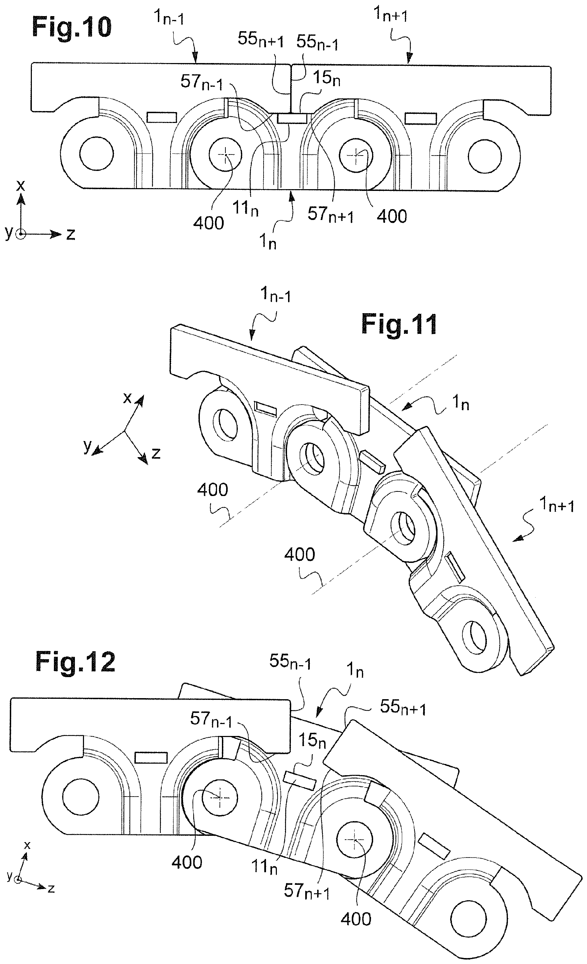

En figure 10, la joue 1ₙ est assemblée, d'un côté à la joue 1ₙ₊₁, et du côté opposé à une joue 1ₙ₋₁. La portion de chaîne 100 qui passe d'une configuration courbée telle que représentée en figures 11 et 12 à une configuration rectiligne telle que représentée en figure 10 ne peut pas se courber dans le sens opposé grâce à la mise en butée des surfaces latérales 15 et 57 correspondantes des trois joues 1. Les surfaces latérales 15, 57 forment alors des surfaces de butée. Sur les figures 10, 11 et 12, les barres 91 formant axe de rotation 400 ne sont pas représentées.

Lors d'une opération de déploiement de la chaîne 100, cette dernière passe progressivement d'une configuration enroulée, ou au moins courbée, à une configuration rectiligne pour travailler en compression selon la direction longitudinale z et pousser un élément mobile et/ou en traction par l'intermédiaire des barres 91 disposées dans les trous 75. Lors de son déploiement, la chaîne 100 est entraînée par un organe moteur. Les portions de chaîne 100, les maillons 200, passent les uns à la suite des autres dans au moins une zone de guidage. La zone de guidage, par exemple un ensemble de rails, force les joues 1 à tourner les unes par rapport aux autres pour adopter une configuration rectiligne, par exemple pour passer de l'état représenté en figures 11 et 12 à celui représenté en figure 10.

Les joues 1 sont alors alignées sur deux couches qui correspondent à la double épaisseur. Autrement dit, une première couche est formée par la mise bout à bout des joues 1ₙ₋₄, 1ₙ₋₂, 1ₙ, 1ₙ₊₂, 1ₙ₊₄, etc. tandis que la seconde couche est formée par la mise bout à bout des joues 1ₙ₋₃, 1ₙ₋₁, 1ₙ₊₁, 1ₙ₊₃, etc. Les surfaces frontales 55ₙ₋₁ et 55ₙ₊₁ viennent en appui l'une contre l'autre. Ainsi, les joues 1 sont poussées deux à deux les unes contre les autres au fur et à mesure du déploiement et par l'intermédiaire de leurs surfaces frontales 55 respectives qui forment alors des surfaces d'appui. Les maillons de la chaîne 100 travaillent en compression selon la direction longitudinale z. À l'échelle de la chaîne 100, les forces de compression se répartissent dans deux sections perpendiculaires à la direction principale z de la chaîne 100 à l'état rectiligne, les deux sections correspondant sensiblement au double de l'aire de la surface frontale 55.

Dans de premières applications, la chaîne 100 est prévue pour travailler selon une direction inclinée par rapport à l'horizontale ou à l'horizontale. Dans ce cas, la direction longitudinale z correspond à cette direction de travail. Par exemple, la chaîne 100 est utilisée pour convoyer des masses importantes. Le poids de la chaîne 100 est généralement trop élevé pour que la chaîne 100 résiste à un cintrage, une courbure involontaire, sous son propre poids. Des supports externes sont alors nécessaires, en particulier pour travailler sur des courses importantes. La portion rectiligne de la chaîne 100 repose alors sur des structures adaptées et par rapport auxquelles elle se déplace en translation. Dans ce cas, la présence de tétons 11, 611, 711 et la coopération avec les surfaces latérales 57, 657, 757 peuvent être superflues. Néanmoins, la coopération entre téton 11, 611, 711 et surfaces latérales 57, 657, 757 améliore le maintien d'un bon alignement des maillons de la chaîne 100.

Dans de secondes applications, la chaîne 100 est prévue pour travailler sensiblement à la verticale. Dans ce cas, la direction longitudinale z correspond à la direction verticale. Par exemple, la chaîne 100 est utilisée pour soulever une plateforme d'un monte-charge. Le poids de la plateforme, des articles qu'elle supporte et/ou de la chaîne 100 elle-même peuvent suffire à maintenir une force de compression élevée selon la direction longitudinal z dans la portion verticale de la chaîne 100. Dans ce cas, la présence de tétons 11, 611, 711 et la coopération entre les surfaces latérales 15, 57, 615, 657, 715, 757 peuvent être superflues. En variante, des guides accompagnent le mouvement de la chaîne 100 le long d'une partie au moins de sa course verticale de manière à empêcher les phénomènes de flambage et une courbure accidentelle de la chaîne 100. Par exemple, des rails sont disposés de manière à supporter par contact glissant le chant longitudinal 35 et/ou le chant longitudinal 37 des joues 1. Lorsque des tétons 11, 611, 711 sont prévus, leur coopération avec les surfaces latérales 57, 657, 757 respectives améliore le maintien de la chaîne 100 dans une configuration rectiligne.

Lors d'une opération de rangement de la chaîne 100, le sens des mouvements sont inversés par rapport à l'opération de déploiement. La chaîne 100 peut alors travailler en traction, par l'intermédiaire des embases 7 et des barres 91 qui les traversent.

Une chaîne 100 formée par l'assemblage de joues 1 les unes à la suite des autres au moyen de barres 91 disposées dans les paliers formés par les embases 7 est fonctionnelle. Néanmoins, lorsque les courses sont longues et les charges élevées, une telle chaîne 100 tend à être sensible au flambage et au cintrage selon la direction transversale y. En particulier, les portions de liaison 9 des joues 1 peuvent être déformées, ce qui peut conduire à rendre la chaîne 100 inutilisable. Pour limiter ces risques, la chaîne 100 peut être guidée sur une grande partie de sa course pour empêcher les mouvements non désirés. La chaîne 100 peut également être dédoublée comme cela est représenté aux figures 1 et 2. Chaque maillon comprend alors deux joues 1 similaires et reliées par des barres 91 définissant des axes de rotation 400 communs traversant les embases 7. La chaîne 100 présente alors une section transversale de forme sensiblement carrée plutôt qu'aplatie. La tenue et la résistance au cintrage en sont améliorées. La chaîne 100 présente deux rangs de joues 1, chaque rang étant composé de deux couches en quinconce et qui s'interpénètrent. En variante, chaque maillon peut comprendre plus de deux joues similaires et reliées entre elles par des barres.

Dans la configuration représentée aux figures 1 et 2, les paires de joues 1 d'un même maillon 200 sont montées symétriquement par rapport à un plan perpendiculaire à la direction transversale y. En variante, les paires peuvent être montées de manière asymétrique.

Dans l'exemple décrit ici, les joues 1 sont fabriquées à partir d'un flan de tôle métallique. Les joues 1 sont monoblocs. Les joues 1 sont dépourvues de fixation externe du type rivets, vis ou écrou ou de fixation par joint du type soudage ou brasure. En variante, la joue 1 peut être formée d'un seul tenant par exemple par soudage de deux pièces monoblocs.

Le procédé de fabrication peut être décomposé selon les étapes suivantes :
a) détourer une ébauche de joue 1 dans un flan de tôle,
b) décaler les embases 7 par rapport aux talons 5 selon la direction de l'épaisseur et former les portions de liaison 9 reliant le talon 5 à l'embase 7 par pliage, par exemple un double pliage ou soyage.

Ici, le procédé comprend en outre les étapes supplémentaires suivantes :
c) aplanir et rendre parallèles le corps 3 et les talons 5 d'une part, et les embases 7 d'autre part,
d) finir certaines au moins des surfaces fonctionnelles, telles que celles des talons 5, du téton 11 et les trous 75.

Lors de l'étape a) de détourage, le contour de la joue 1 telle que définie précédemment est découpé. En outre, les trous 75 sont également évidés et le téton 11 est formé. À la fin de l'étape de détourage, l'ébauche de joue 1, ou platine, reste sensiblement plane, en forme de plaque. Lors de l'étape b), la formation des portions de liaison 9 fait passer l'ébauche de joue 1 à sa forme définitive ou quasi définitive. L'épaisseur de l'ébauche de joue 1 passe de l'épaisseur de la tôle de départ à une épaisseur hors-tout sensiblement égale au double, c'est-à-dire la somme de l'épaisseur 93 du corps 3 et des talons 5 et de l'épaisseur 97 des embases 7.

En variante, la joue 1 est fabriquée, au moins en partie, par usinage dans la masse. Une ébauche d'épaisseur sensiblement égale à l'épaisseur hors-tout souhaitée de la joue 1 peut subir des opérations successives de retrait de matière pour obtenir la joue 1. Le décalage de la joue 1 peut aussi être obtenu par soudage ou mécano-assemblage de deux pièces.

En variante, la joue 1 est réalisée en matériau non métallique, par exemple en plastique. La joue 1 peut par exemple être réalisée par injection.

L'invention ne se limite pas aux exemples de maillons de chaîne rigide et de chaînes rigides décrits ci-avant, seulement à titre d'exemple, mais elle englobe toutes les variantes que pourra envisager l'homme de l'art dans le cadre des revendications ci-après.

## Revendications

1. Chaîne rigide (100) formée par l'assemblage de maillons (200ₙ₋₁, 200ₙ, 200ₙ₊₁) de chaîne rigide les uns à la suite des autres, les maillons (200ₙ), comprenant au moins une joue (1), de forme générale rectangulaire, d'épaisseur (93, 97) sensiblement constante perpendiculairement à son plan principal (81), la joue (1) comprenant une première partie (2) et une seconde partie (4), chacune des parties (2, 4) comprenant :
- un talon (5) agencé de manière à venir en appui contre un talon correspondant d'une joue analogue (1ₙ₋₁ ; 1ₙ₊₁) d'un maillon (200ₙ₋₁ ; 200ₙ₊₁) adjacent de la chaîne rigide (100), chaque talon (5) portant une surface frontale (55) orientée de manière à venir en appui contre une surface correspondante dudit maillon (200ₙ₋₁ ; 200ₙ₊₁) adjacent, la surface frontale (55) et un chant longitudinal (35) étant sensiblement perpendiculaires, la surface frontale (55) étant sensiblement continue, plane et perpendiculaire à une direction longitudinale et
- une embase (7) agencée de manière à former palier autour d'un axe (400) de rotation par rapport audit maillon (200ₙ₋₁ ; 200ₙ₊₁) adjacent **caractérisée en ce que** le talon (5) et l'embase (7) s'étendent respectivement d'un côté et de l'autre du plan principal (81) et parallèlement audit plan principal (81).

2. Chaîne rigide (100) selon la revendication 1, dans laquelle le talon (5) de la première partie (2) et le talon (5) de la seconde partie (4) s'étendent tous deux d'un côté du plan principal (81) tandis que l'embase (7) de la première partie (2) et l'embase (7) de la seconde partie (4) s'étendent toutes deux du côté opposé du plan principal (81).

3. Chaîne rigide (100) selon l'une des revendications précédentes, dans laquelle l'embase (7) de la première partie (2) et l'embase (7) de la seconde partie (4) sont sensiblement le symétrique l'une de l'autre par rapport à un plan transversal (83) perpendiculaire au plan principal (81).

4. Chaîne rigide (100) selon l'une des revendications précédentes, portant des surfaces (55, 15, 615, 715, 57, 657, 757) agencées sensiblement en correspondance de forme pour coopérer par butée avec des surfaces correspondantes de maillons analogues (200ₙ₋₂, 200ₙ₋₁, 200ₙ₊₁, 200ₙ₊₂) de la chaîne rigide (100), le talon (5) de la première partie (2) et le talon (5) de la seconde partie (4) étant sensiblement le symétrique l'un de l'autre par rapport à un plan transversal (83) perpendiculaire au plan principal (81), à la forme des surfaces (55, 15, 615, 715, 57, 657, 757) agencées pour coopérer par butée près.

5. Chaîne rigide (100) selon l'une des revendications précédentes, dans lequel la joue (1) est formée d'un seul tenant.

6. Chaîne rigide (100) selon l'une des revendications précédentes, dans laquelle le talon (5) et l'embase (7) de l'une au moins de la première partie (2) et de la seconde partie (4) présentent chacun une face (31; 71) sensiblement coplanaires avec le plan principal (81).

7. Chaîne rigide (100) selon l'une des revendications précédentes, dans laquelle la joue (1) comprend en outre un corps (3), le corps (3) reliant les talons (5) et les embases (7) les uns aux autres.

8. Chaîne rigide (100) selon l'une des revendications précédentes, dans laquelle la première partie (2) et la seconde partie (4) de la joue (1) comprennent chacune une portion de liaison (9) reliant le talon (5) et l'embase (7) l'un à l'autre, les portions de liaison (9) étant formées par pliage du flan de tôle.

9. Chaîne rigide (100) selon l'une des revendications précédentes, dans laquelle un trou (75) sensiblement circulaire est ménagé dans l'embase (7), un espace (77, 79, 80) étant ménagé entre le talon (5) et l'embase (7), ledit espace (77, 79, 80) étant ouvert sur une extrémité longitudinale de la pièce (1) et s'étendant longitudinalement vers l'extrémité longitudinale opposée jusqu'au-delà du centre du trou (75) circulaire.

10. Chaîne rigide (100) selon l'une des revendications précédentes, dans laquelle la joue (1) porte des surfaces latérales (57, 657, 757, 15, 615, 715) orientées de manière à limiter la rotation relative du maillon (200ₙ) et dudit maillon (200ₙ₋₁ ; 200ₙ₊₁) adjacent par butée contre des surfaces correspondantes dudit maillon (200ₙ₋₁ ; 200ₙ₊₁) adjacent.

11. Chaîne rigide (100) selon la revendication 10, dans laquelle la joue (1) comprend en outre un téton (11 ; 611 ; 711) du même côté du plan principal (81) que les embases (7), les talons (5) présentant l'une desdites surfaces latérales (57, 657, 757), le téton (11 ; 611 ; 711) portant une autre desdites surfaces latérales (15 ; 615 ; 715), de sorte que la surface latérale (57 ; 657 ; 757) du talon (5) vienne en butée contre la surface latéral correspondante du téton dudit maillon (200ₙ₋₁ ; 200ₙ₊₁) adjacent et que la surface (15 ; 615 ; 715) du téton (11 ; 611 ; 711) vienne en butée contre la surface latéral correspondante du talon dudit maillon (200ₙ₋₁ ; 200ₙ₊₁) adjacent.

12. Chaîne rigide (100) selon l'une des revendications précédentes, dans laquelle l'orientation de la joue (1) d'un maillon (200ₙ,) est inversée selon une direction d'épaisseur par rapport à celle de la joue (1) respectivement du maillon précédent (200ₙ₋₁) et du maillon suivant (200ₙ₊₁), chaque maillon (200ₙ,) étant monté à rotation respectivement avec le maillon précédent (200ₙ₋₁) et avec le maillon suivant (200ₙ₊₁) par l'intermédiaire de barres (91) enfilées dans les embases (7).

13. Procédé de fabrication d'un maillon (200ₙ) de chaîne rigide (100) selon l'une des revendications 1 à 12 comprenant les étapes suivantes :
a) détourer une ébauche de joue (1) dans un flan de tôle, et
b) décaler les embases (7) par rapport aux talons (5) selon la direction de l'épaisseur et former des portions de liaison (9) reliant un talon (5) et une embase (7) par pliage.

## Patentansprüche

1. Starre Kette (100), die durch Zusammensetzen von Gliedern (200ₙ₋₁, 200ₙ, 200ₙ₊₁) einer starren Kette nacheinander gebildet wird, wobei die Glieder (200ₙ) mindestens eine Wange (1) in einer allgemeinen rechteckigen Form mit einer im Wesentlichen konstanten Dicke (93, 97) senkrecht zu ihrer Hauptebene (81) umfassen, wobei die Wange (1) einen ersten Teil (2) und einen zweiten Teil (4) umfasst, wobei jeder der Teile (2, 4) umfasst:
- einen Absatz (5), derart eingerichtet, um sich an einen entsprechenden Absatz einer analogen Wange (1ₙ₋₁; 1ₙ₊₁) eines angrenzenden Glieds (200ₙ₋₁; 200ₙ₊₁) der starren Kette (100) anzulegen, wobei jeder Absatz (5) eine Stirnfläche (55) trägt, die derart ausgerichtet ist, um sich an eine entsprechende Oberfläche des angrenzenden Glieds (200ₙ₋₁; 200ₙ₊₁) anzulegen, wobei die Stirnfläche (55) und eine Längskante (35) im Wesentlichen senkrecht sind, wobei die vordere Oberfläche (55) im Wesentlichen durchgehend, eben und senkrecht zu einer Längsrichtung ist, und
- einen Sockel (7), derart eingerichtet, um ein Lager um eine Drehachse (400) in Bezug auf das angrenzende Glied (200ₙ₋₁; 200ₙ₊₁) zu bilden, **dadurch gekennzeichnet, dass** sich der Absatz (5) und der Sockel (7) jeweils auf der einen und der anderen Seite der Hauptebene (81) und parallel zur Hauptebene (81) erstrecken.

2. Starre Kette (100) nach Anspruch 1, wobei sich der Absatz (5) des ersten Teils (2) und der Absatz (5) des zweiten Teils (4) beide auf einer Seite der Hauptebene (81) erstrecken, während sich der Sockel (7) des ersten Teils (2) und der Sockel (7) des zweiten Teils (4) beide auf der gegenüberliegenden Seite der Hauptebene (81) erstrecken.

3. Starre Kette (100) nach einem der vorstehenden Ansprüche, wobei der Sockel (7) des ersten Teils (2) und der Sockel (7) des zweiten Teils (4) in Bezug auf eine Querebene (83) senkrecht zur Hauptebene (81) im Wesentlichen symmetrisch zueinander sind.

4. Starre Kette (100) nach einem der vorstehenden Ansprüche, die Oberflächen (55, 15, 615, 715, 57, 657, 757) trägt, die im Wesentlichen formschlüssig eingerichtet sind, um durch Anschlag mit entsprechenden Oberflächen analoger Glieder (200ₙ₋₂, 200n₋₁, 200ₙ₊₁, 200ₙ₊₂) der starren Kette (100) zusammenzuwirken, wobei der Absatz (5) des ersten Teils (2) und der Absatz (5) des zweiten Teils (4) im Wesentlichen symmetrisch zueinander in Bezug auf eine Querebene (83) senkrecht zur Hauptebene (81), unabhängig von der Form der Oberflächen (55, 15, 615, 715, 57, 657, 757), die eingerichtet sind, um durch Anschlag zusammenzuwirken.

5. Starre Kette (100) nach einem der vorstehenden Ansprüche, wobei die Wange (1) aus einem Stück gebildet ist.

6. Starre Kette (100) nach einem der vorstehenden Ansprüche, wobei der Absatz (5) und der Sockel (7) von mindestens einem des ersten Teils (2) und des zweiten Teils (4) jeweils eine Fläche (31; 71) im Wesentlichen komplanar mit der Hauptebene (81) aufweisen.

7. Starre Kette (100) nach einem der vorstehenden Ansprüche, wobei die Wange (1) weiter einen Körper (3) umfasst, wobei der Körper (3) die Absätze (5) und die Sockel (7) miteinander verbindet.

8. Starre Kette (100) nach einem der vorstehenden Ansprüche, wobei der erste Teil (2) und der zweite Teil (4) der Wange (1) jeweils einen Verbindungsabschnitt (9) umfassen, der den Absatz (5) und den Sockel (7) miteinander verbindet, wobei die Verbindungsabschnitte (9) durch Falzen des Blechzuschnitts gebildet werden.

9. Starre Kette (100) nach einem der vorstehenden Ansprüche, wobei ein im Wesentlichen kreisförmiges Loch (75) in den Sockel (7) eingearbeitet ist, wobei ein Freiraum (77, 79, 80) zwischen dem Absatz (5) und dem Sockel (7) eingearbeitet ist, wobei der Freiraum (77, 79, 80) an einem Längsende des Stücks (1) offen ist, und sich längs zum gegenüberliegenden Längsende bis über die Mitte des kreisförmigen Lochs (75) hinaus erstreckt.

10. Starre Kette (100) nach einem der vorstehenden Ansprüche, wobei die Wange (1) seitliche Oberflächen (57, 657, 757, 15, 615, 715) trägt, die derart ausgerichtet sind, um die relative Drehung des Glieds (200ₙ) und des angrenzenden Glieds (200ₙ₋₁; 200ₙ₊₁) durch Anschlag an entsprechende Oberflächen des angrenzenden Glieds (200ₙ₋₁; 200ₙ₊₁) zu begrenzen.

11. Starre Kette (100) nach Anspruch 10, wobei die Wange (1) weiter einen Zapfen (11; 611; 711) auf derselben Seite der Hauptebene (81) wie die Sockel (7) umfasst, wobei die Absätze (5) eine der seitlichen Oberflächen (57, 657, 757) aufweisen, der Zapfen (11; 611; 711) eine andere der seitlichen Oberflächen (15; 615; 715) derart trägt, dass die seitliche Oberfläche (57; 657; 757) des Absatzes (5) an die entsprechende seitliche Oberfläche des Zapfens des angrenzenden Glieds (200ₙ₋₁, 200ₙ₊₁) anschlägt, und dass die Oberfläche (15; 615; 715) des Zapfens (11; 611; 711) an die entsprechende seitliche Oberfläche des Zapfens des angrenzenden Glieds (200ₙ₋₁; 200ₙ₊₁) anschlägt.

12. Starre Kette (100) nach einem der vorstehenden Ansprüche, wobei die Ausrichtung der Wange (1) eines Glieds (200ₙ) in einer Dickenrichtung in Bezug auf jene der Wange (1) beziehungsweise des vorherigen Glieds (200ₙ₋₁) und des folgenden Glieds (200ₙ₊₁) umgekehrt ist, wobei jedes Glied (200ₙ,) jeweils anhand von Stäben (91), die in die Sockel (7) eingeführt werden, drehend mit dem vorherigen Glied (200ₙ₋₁) und dem folgenden Glied (200ₙ₊₁) angebracht sind.

13. Verfahren zur Herstellung eines Glieds (200ₙ) einer starren Kette (100) nach einem der Ansprüche 1 bis 12, die folgenden Schritte umfassend:
a) Ausschneiden eines Wangenrohlings (1) aus einem Blechausschnitt, und
b) Versetzen der Sockel (7) in Bezug auf die Absätze (5) in der Richtung der Dicke und Bilden durch Falzen von Verbindungsabschnitten (9), die einen Absatz (5) und einen Sockel (7) verbinden.

## Claims

1. A rigid chain (100) formed by assembling links (200ₙ₋₁, 200ₙ, 200ₙ₊₁) of a rigid chain one after the other, the links (200ₙ), comprising at least one flange (1), of rectangular general shape, of substantially constant thickness (93, 97) perpendicular to its main plane (81), the flange (1) comprising a first part (2) and a second part (4), each of the parts (2, 4) comprising:
- a heel (5) adapted to come to bear against a corresponding heel of an analogous flange (1ₙ₋₁; 1ₙ₊₁) of an adjacent link (200ₙ₋₁; 200ₙ₊₁) of the rigid chain (100), each heel (5) bearing a frontal surface (55) oriented so as to come to bear against a corresponding surface of said adjacent link (200ₙ₋₁; 200ₙ₊₁), the front surface (55) and the longitudinal edge surface (35) being substantially perpendicular, the front surface (55) being substantially continuous, plane and perpendicular to a transverse direction and
- a base (7) adapted to form a bearing around a rotation axis (400) relative to said adjacent link (200ₙ₋₁; 200ₙ₊₁) **characterized in that**
the heel (5) and the base (7) lie on respective opposite sides of the main plane (81) and parallel to said main plane (81).

2. A rigid chain (100) as claimed in claim 1, in which the heel (5) of the first part (2) and the heel (5) of the second part (4) both lie on one side of the main plane (81) whilst the base (7) of the first part (2) and the base (7) of the second part (4) both lie on the opposite side of the main plane (81).

3. A rigid chain (100) as claimed in either one of the preceding claims, in which the base (7) of the first part (2) and the base (7) of the second part (4) are substantially symmetrical with respect to one another relative to a transverse plane (83) perpendicular to the main plane (81).

4. A rigid chain (100)as claimed in any one of the preceding claims, bearing surfaces (55, 15, 615, 715, 57, 657, 757) with substantially corresponding shapes adapted to cooperate in abutment with corresponding surfaces of analogous links (200ₙ₋₂, 200ₙ₋₁, 200ₙ₊₁, 200ₙ₊₂) of the rigid chain (100), the heel (5) of the first part (2) and the heel (5) of the second part (4) being substantially symmetrical with respect to one another relative to a transverse plane (83) perpendicular to the main plane (81), apart from the shape of the surfaces (55, 15, 615, 715, 57, 657, 757) adapted to cooperate by abutting.

5. A rigid chain (100) as claimed in any one of the preceding claims, in which the flange (1) is formed in one piece.

6. A rigid chain (100) as claimed in any one of the preceding claims, in which the heel (5) and the base (7) of the first part (2) and the second part (4) each have a face (31; 71) substantially coplanar with the main plane (81).

7. A rigid chain (100) as claimed in any one of the preceding claims, in which the flange (1) further comprises a body (3), the body (3) connecting the heels (5) and the bases (7) to one another.

8. A rigid chain (100) as claimed in any one of the preceding claims, in which the first part (2) and the second part (4) of the flange (1) each comprise a connecting portion (9) connecting the heel (5) and the base (7) to one another, the connecting portions (9) being formed by bending the sheet metal.

9. A rigid chain (100) as claimed in any one of the preceding claims, in which a substantially circular hole (75) is formed in the base (7), a space (77, 79, 80) being formed between the heel (5) and the base (7), said space (77, 79, 80) being open at one longitudinal end of the part (1) and extending longitudinally toward the opposite longitudinal end beyond the center of the circular hole (75).

10. A rigid chain (100) as claimed in any one of the preceding claims, in which the flange (1) bears lateral surfaces (57, 657, 757, 15, 615, 715) oriented so as to limit the relative rotation of the link (200ₙ) and said adjacent link (200ₙ₋₁; 200ₙ₊₁) by abutting against corresponding surfaces of said adjacent link (200ₙ₋₁; 200ₙ₊₁).

11. A rigid chain (100) as claimed in claim 10, in which the flange (1) further comprises a nipple (11; 611; 711) on the same side of the main plane (81) as the bases (7), the heels (5) featuring one of said lateral surfaces (57, 657, 757), the nipple (11; 611; 711) bearing another of said lateral surfaces (15; 615; 715), so that the lateral surface (57; 657; 757) of the heel (5) comes to abut against the corresponding lateral surface of the nipple of said adjacent link (200ₙ₋₁; 200ₙ₊₁) and the surface (15; 615; 715) of the nipple (11; 611; 711) comes to abut against the corresponding lateral surface of the heel of said adjacent link (200ₙ₋₁; 200ₙ₊₁).

12. A rigid chain (100) as claimed in any one of the preceding claims, in which the orientation of the flange (1) of one link (200ₙ,) is reversed in a thickness direction relative to that of the respective flange (1) of the preceding link (200ₙ₋₁) and the following link (200ₙ₊₁), each link (200ₙ,) being mounted in rotation with the preceding link (200ₙ₋₁) and with the following link (200ₙ₊₁) respectively by means of rods (91) threaded into the bases (7).

13. A method of manufacturing a link (200ₙ) of a rigid chain (100) according to any one of claims 1 to 12 comprising the following steps:
a) cropping a flange (1) blank in sheet metal, and
b) offsetting the bases (7) relative to the heels (5) in the direction of the thickness and forming connecting portions (9) connecting a heel (5) and a base (7) by bending.
